# EUROPÄISCHE PATENTSCHRIFT

(11) **EP 3 443 566 B1**
(45) Veröffentlichungstag und Bekanntmachung des Hinweises auf die Patenterteilung: **15.09.2021**
(21) Anmeldenummer: 17717112.1
(22) Anmeldetag: 06.04.2017
(51) Int. Cl.: H01B 7/42, B60L 53/14, B60L 53/302

(54) **LADEKABEL ZUR ÜBERTRAGUNG ELEKTRISCHER ENERGIE, LADESTECKER UND LADESTATION ZUR ABGABE ELEKTRISCHER ENERGIE AN EINEN EMPFÄNGER ELEKTRISCHER ENERGIE**
CHARGING CABLE FOR TRANSMITTING ELECTRICAL ENERGY, CHARGING PLUG AND CHARGING STATION FOR DISCHARGING ELECTRICAL ENERGY TO A RECIPIENT OF ELECTRICAL ENERGY
CÂBLE DE CHARGE POUR LA TRANSMISSION D'ÉNERGIE ÉLECTRIQUE, CONNECTEUR DE CHARGE ET STATION DE CHARGE POUR LA DISTRIBUTION D'ÉNERGIE ÉLECTRIQUE À UN RÉCEPTEUR D'ÉNERGIE ÉLECTRIQUE

(30) Priorität: 14.04.2016 DE 102016206266
(43) Veröffentlichungstag der Anmeldung: 20.02.2019
(73) Patentinhaber: Phoenix Contact e-Mobility GmbH, 32816 Schieder-Schwalenberg (DE)
(72) Erfinder: FÜHRER, Thomas, 32825 Blomberg (DE); BABEZKI, Robert, 32839 Steinheim (DE)
(74) Vertreter: Richly & Ritschel Patentanwälte PartG mbB
(86) Internationale Anmeldenummer: PCT/EP2017/058211
(87) Internationale Veröffentlichungsnummer: WO 2017/178320

(56) Entgegenhaltungen:
- CN-U- 203 982 846
- JP-A- 2012 146 542
- US-A1- 2009 167 078
- US-A1- 2015 217 654

## Beschreibung

Die vorliegende Erfindung betrifft ein Ladekabel zur Übertragung elektrischer Energie, das insbesondere zur Übertragung elektrischer Energie beim Aufladen eines Elektrofahrzeugs verwendet wird. Ferner betrifft die vorliegende Erfindung einen Ladestecker zur Kopplung mit einer korrespondierenden Verbindungsvorrichtung und zur Übertragung elektrischer Energie. Weiterhin betrifft die vorliegende Erfindung eine Ladestation zur Abgabe elektrischer Energie an einen Empfänger elektrischer Energie.

Aus dem Stand der Technik sind Ladekabel zur Übertragung elektrischer Energie bekannt, die zumindest ein Stromleitungskabel aufweisen, das von einem Kabelmantel umschlossen ist. Bei der Übertragung elektrischer Ströme über das Stromleitungskabel erwärmt sich dieses aufgrund ohmscher Verluste innerhalb des Stromleitungskabels. Bei einer Erwärmung des Stromleitungskabels steigt wiederum der ohmsche Widerstand des Stromleitungskabels, so dass dann die Erwärmung des Stromleiterkabels beschleunigt vonstatten geht.

Bei aus dem Stand der Technik bekannten Ladekabeln weisen die Stromleitungskabel und eventuell weiterer Strukturen, so wie Füllstränge aus einem Fasermaterial, kreisrunde Querschnitte auf, so dass die Stromleitungskabel mit den weiteren im Ladungskabel vorhandenen Strukturen lediglich eine Kontaktlinie aufweisen. Eine Übertragung von Wärme von dem Stromleitungskabel auf die weiteren im Ladekabel vorhandenen Strukturen ist somit nicht sehr effizient.

Zur Reduzierung der erzeugten Wärme muss der ohmsche Widerstand des Stromleitungskabels reduziert werden. Hierzu ist es bekannt, die Leitungsquerschnitte von Stromleitungskabeln zu erhöhen. Diese Vorgehensweise stößt jedoch aus handhabungstechnischen Gründen an Grenzen, da ein entsprechendes Ladekabel, mit dem Ladeströme von 350 A bei Spannungen von bis zu 1000 V übertragbar sind, derart groß und schwer wäre, dass ein Bedienen eines Ladesteckers, in den ein entsprechendes Ladekabel mündet, nur schwer möglich ist, da ein entsprechendes Ladekabel ein zu hohes Gewicht aufweisen würde.

Aus dem Stand der Technik sind Ladestecker für elektrisch antreibbare Fahrzeuge bekannt, die zur Verbindung mit einer korrespondierenden, als Buchse ausgebildeten Verbindungsvorrichtung ausgebildet sind. Diesbezüglich wird auf den in der DE 10 2012 105 774 B3 offenbarten Ladestecker verwiesen. In dem Ladestecker sind Leistungskontakte angeordnet, die jeweils einen ersten Anschlussbereich und einen zweiten Anschlussbereich aufweisen. Der erste Anschlussbereich ist als Kontaktbuchse ausgebildet und zur galvanischen Verbindung mit einem Kontaktstift geeignet, wobei der Kontaktstift mit einem elektrischen Energieempfänger, beispielsweise einem Akkumulator eines Fahrzeuges galvanisch verbundenen ist. Der zweite Anschlussbereich des Leistungskontakts ist zur galvanischen Verbindung mit einer elektrischen Energiequelle, beispielsweise eine Ladestation oder im Allgemeinen mit einem elektrischen Versorgungsnetz ausgebildet. Der zweite Anschlussbereich ist dazu fest mit einem Ladekabel verbunden.

Das Dokument JP 2012-146542 A beschreibt ein Ladekabel zum Laden einer Batterie eines Kraftfahrzeugs.

Aufgrund eines durch das Ladekabel fließenden Ladestroms heizt sich das Ladekabel unweigerlich aufgrund von ohmschen Stromwärmeverlusten auf. Das Aufheizen des Ladekabels ist jedoch auf eine Grenztemperaturerhöhung limitiert. So ist beispielsweise gemäß der Norm IEC 62196-3 die Grenztemperaturerhöhung auf 50K limitiert, was zu einer Begrenzung des maximalen Ladestroms führt.

Bei einer Aufladung eines Akkumulators sind hingegen höhere Ladeströme von 350 A und mehr über begrenzte Zeiträume notwendig, um den Akkumulator in einer gewünscht kurzen Zeit aufzuladen. Dies wiederum führt zu einer temporären Erhitzung des Ladekabels, die über der Grenztemperaturerhöhung liegt. Wie bereits oben erwähnt, kann der Leitungsquerschnitt des Ladekabels nicht beliebig vergrößert werden, da dies die Handhabe des mit dem Ladekabel verbundenen Ladesteckers erschweren, wenn nicht gar für einen Menschen unmöglich machen würde.

Der vorliegenden Erfindung liegt die Aufgabe zugrunde, ein Ladekabel bereitzustellen, das erhöhte Ladeströme bei einer begrenzten Aufheizung ermöglicht, folglich also eine erhöhte Stromtragfähigkeit aufweist.

Diese Aufgabe wird durch ein Ladekabel mit den Merkmalen des Anspruchs 1 gelöst. Vorteilhafte Ausführungsformen sind in den von Anspruch 1 abhängigen Ansprüchen beschrieben.

Ferner liegt der vorliegenden Erfindung die Aufgabe zugrunde, einen Ladestecker bereitzustellen, mittels dem erhöhte Ladeströme übertragbar sind, ohne dass sich der Ladestecker übermäßig erhitzt.

Diese Aufgabe wird durch einen Ladestecker mit den Merkmalen des Anspruchs 7 gelöst.

Letztendlich liegt der vorliegenden Erfindung auch die Aufgabe zugrunde, eine Ladestation zur Abgabe elektrischer Energie an einen Empfänger elektrischer Energie bereitzustellen, mittels der erhöhte Spitzenladeströme übertragbar sind. Diese Aufgabe wird durch eine Ladestation mit den Merkmalen des Anspruchs 8 gelöst.

Im Genaueren wird die der vorliegenden Erfindung zugrundeliegende Aufgabe durch ein Ladekabel zur Übertragung elektrischer Energie mit einem Kabelmantel und zumindest einem innerhalb des Kabelmantels angeordneten Stromleiterkabel gelöst, wobei zumindest ein Hohlraum innerhalb des Ladekabels zwischen dem Kabelmantel und dem Stromleiterkabel mit einem Wärmeleitmedium derart gefüllt ist, dass das Wärmeleitmedium in direkten Kontakt mit dem Stromleiterkabel steht.

Durch den direkten und unmittelbaren Kontakt des Wärmeleitmediums mit dem Stromleiterkabel wird die in dem Stromleiterkabel durch ohmsche Verluste erzeugte Wärme verbessert auf den Rest des Ladekabels übertragen. Folglich weist das Stromleiterkabel eine niedrigere Temperatur auf, so dass mit dem Stromleiterkabel größere Ladeströme übertragen werden können, ohne dass das Stromleiterkabel und das Ladekabel selber übermäßig erhitzt werden. Folglich ist es möglich, mit dem erfindungsgemäßen Ladekabel erhöhte Ladeströme zu übertragen, ohne den Leitungsquerschnitt / die Leitungsquerschnitte des Stromleiterkabels / der Stromleiterkabel zu vergrößern. Daher wird die Handhabbarkeit des Ladekabels und beispielsweise eines mit dem Ladekabel gekoppelten Ladesteckers nicht verschlechtert, obwohl größere Ladeströme mittels des Ladekabels übertragbar sind. Weiterhin wird eine übermäßige Erhitzung des Stromleiterkabels / der Stromleiterkabel verhindert.

Das Stromleiterkabel ist von einem Isolationsmantel umschlossen, so dass der Freiraum zwischen dem Kabelmantel und dem Isolationsmantel des Stromleiterkabels von dem Wärmeleitmedium gefüllt ist. Das Wärmeleitmedium steht daher mit dem Isolationsmantel des Stromleiterkabels in direktem und unmittelbarem Kontakt.

Selbstverständlich kann das erfindungsgemäße Ladekabel auch zwei und mehr Stromleiterkabel aufweisen, wobei dann die Hohlräume zwischen dem Kabelmantel und den jeweiligen Stromleiterkabeln mit dem Wärmeleitmedium gefüllt sind.

Das Wärmeleitmedium wirkt einer Biegung des Ladekabels nicht entgegen, so dass das Ladekabel weiterhin gut bedienbar bleibt.

Das Ladekabel ist insbesondere für die Kopplung mit einem Ladestecker zur Aufladung eines Elektrofahrzeugs ausgebildet.

Das Wärmeleitmedium ist als Gel bzw. als Wärmeleitgel ausgebildet sein. Beispielsweise kann das Wärmeleitgel als wasserbasiertes Gel und/oder als Kolloid-System ausgebildet sein. Das wasserbasierte Gel und/oder das Kolloid-System kann Methylcellulose und/oder Alginate aufweisen.

Das Wärmeleitmedium kann weiter vorzugsweise auch als Wärmeleitflüssigkeit ausgebildet sein.

Das Wärmeleitmedium gemäß der vorliegenden Erfindung ist nicht als Gas, insbesondere nicht als Luft bzw. Atemluft zu verstehen.

Erfindungsgemäß weist das Ladekabel zumindest eine Kühlleitung auf, die innerhalb des Kabelmantels angeordnet und von einem Kühlfluid durchströmbar ist.

Durch Anordnen einer Kühlleitung, die von einem Kühlfluid durchströmbar ist, wird das Ladekabel nochmals verbessert gekühlt. Die in dem Stromleiterkabel durch ohmsche Verluste erzeugte Wärme wird mittels des Wärmeleitmediums auf die Kühlleitung und somit auf das die Kühlleitung durchströmende Kühlfluid übertragen, so dass die Temperatur des gesamten Ladekabels und insbesondere die Temperatur des Stromleiterkabels / der Stromleiterkabel besonders effektiv reduziert wird / werden. Daher können mit einem entsprechend ausgebildeten Ladekabel nochmals größere Ladeströme übertragen werden, ohne dass die Querschnitte der Stromleiterkabel vergrößert werden müssen. Hierdurch bleibt die Handhabbarkeit des Ladekabels und eines mit dem Ladekabel verbundenen Ladesteckers erhalten.

Selbstverständlich können innerhalb des Ladekabels auch zwei und mehr Kühlleitungen angeordnet sein, die alle innerhalb des Kabelmantels angeordnet sind.

Als Kühlfluid kann beispielsweise Wasser verwendet werden. Ferner können als Kühlfluid Ketone, insbesondere fluorisierte Ketone verwendet werden. Ketone weisen den Vorteil auf, dass diese nicht elektrisch leitfähig sind.

Vorzugsweise ist das Ladekabel derart ausgebildet, dass ein Hohlraum im Ladekabel zwischen dem Kabelmantel und der Kühlleitung mit dem Wärmeleitmedium gefüllt ist, so dass das Wärmeleitmedium in direkten Kontakt mit der Kühlleitung steht.

Hierdurch ist ein nochmals verbesserter Wärmetransport innerhalb des Ladekabels realisiert, so dass die Temperatur des Ladekabels und des Stromleiterkabels / der Stromleiterkabel nochmals reduziert ist, so das erhöhte Ladeströme mittels des Ladekabels übertragbar sind.

Vorzugsweise weist das Ladekabel zumindest einen Wärmeleitstrang auf, der mit dem Wärmeleitmedium in direkten Kontakt steht.

Der Wärmeleitstrang bewirkt, dass das Ladekabel weniger Hohlräume / Hohlvolumina aufweist, die von dem Wärmeleitmedium gefüllt sind. Da der Wärmeleitstrang eine hohe Wärmeleitfähigkeit aufweisen kann, insbesondere wenn der Wärmeleitstrang beispielsweise aus Kupfer gebildet ist, die in dem Stromleiterkabel erzeugte Wärme nochmals verbessert an das übrige Ladekabel abgegeben, so dass erhöhte Ladeströme mittels des Ladekabels übertragbar sind, ohne dass sich dieses übermäßig erhitzt.

Vorzugsweise weist das Ladekabel zumindest einen Füllstrang auf, der mit dem Wärmeleitmedium durchtränkt ist.

Der Füllstrang dient zur Speicherung des Wärmeleitmediums. Dies hat insbesondere Vorteile bei der Herstellung des Ladekabels, denn vor der Verseilung wird der Füllstrang von dem Wärmleitmedium durchtränkt, beispielsweise indem der Füllstrang vor der Verseilung durch ein mit dem Wärmeleitmedium getränktes Bad durchgezogen wird. Während der Verseilung wird der Füllstrang komprimiert, so dass sich das im Füllstrang befindliche Wärmeleitmedium in Hohlräume innerhalb des Ladekabels ergießt.

Als Füllstrang kann beispielsweise ein Fasergewebe / Faserstrang, insbesondere aus Baumwollgewebe verwendet werden.

Vorzugsweise weist das Ladekabel eine den Kabelmantel umhüllende Metallumhüllung auf.

Die Metallumhüllung gewährleistet eine nochmals verbesserte Wärmeableitung der von dem Stromleiterkabel erzeugten Wärme an die Umgebung des Ladekabels. Somit kann die in dem Stromleiterkabel erzeugte Wärme nochmals verbessert aus dem Ladekabel abtransportiert werden, so dass die Temperatur des Ladekabels vermindert wird. Folglich lassen sich mit einem entsprechend ausgebildeten Ladekabel erhöhte Ladeströme übertragen, ohne dass das Ladekabel und insbesondere das Stromleiterkabel überhitzen.

Als Material für die Die Metallumhüllung kann Stahl, Kupfer, Messing, Aluminium oder Legierungen dieser Metalle verwendet werden.

Erfindungsgemäß ist das Ladekabel derart ausgebildet, dass das Wärmeleitmedium als Gel, insbesondere als mit einem Keramikpulver gefülltes Gel ausgebildet ist.

Vorzugsweise ist das Ladekabel derart ausgebildet, dass das Wärmeleitmedium als Dispersion, insbesondere als mit einem Keramikpulver gefüllte Dispersion ausgebildet ist.

Als Keramikpulver können Aluminiumnitrid, Siliziumcarbid, Aluminiumoxid, usw. verwendet werden.

Die der vorliegenden Erfindung zugrundeliegende Aufgabe wird auch durch einen Ladestecker zur Kopplung mit einer korrespondierenden Verbindungsvorrichtung und zur Übertragung elektrischer Energie gelöst, wobei der Ladestecker zumindest einen in einem Ladesteckergehäuse angeordneten Leistungskontakt aufweist, wobei ein zweiter Anschlussbereich des Leistungskontakts mit einem oben beschriebenen Ladekabel nach einem der Ansprüche 1 bis 6 galvanisch verbunden ist, und wobei ein erste Anschlussbereich des Leistungskontakts über eine Kontaktseite des Ladesteckergehäuses zugänglich ist.

Ferner wird die der vorliegenden Erfindung zugrundeliegende Aufgabe durch eine Ladestation zur Abgabe elektrischer Energie an einen Empfänger elektrischer Energie gelöst, die einen oben beschriebenen Ladestecker aufweist.

Weitere Vorteile, Einzelheiten und Merkmale der Erfindung ergeben sich nachfolgend aus den erläuterten Ausführungsbeispielen. Dabei zeigen im Einzelnen:
- Figur 1A:: eine perspektivische Darstellung eines erfindungsgemäßen Ladekabels gemäß einer ersten Ausführungsform der vorliegenden Erfindung;
- Figur 1B:: eine Schnittdarstellung des in Figur 1A dargestellten Ladekabels;
- Figur 2A:: eine perspektivische Darstellung eines erfindungsgemäßen Ladekabels gemäß einer zweiten Ausführungsform der vorliegenden Erfindung; und
- Figur 2B:: eine Schnittdarstellung des in Figur 1A dargestellten Ladekabels.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben wurden, auch separat in andere Ausführungsformen verwendbar.

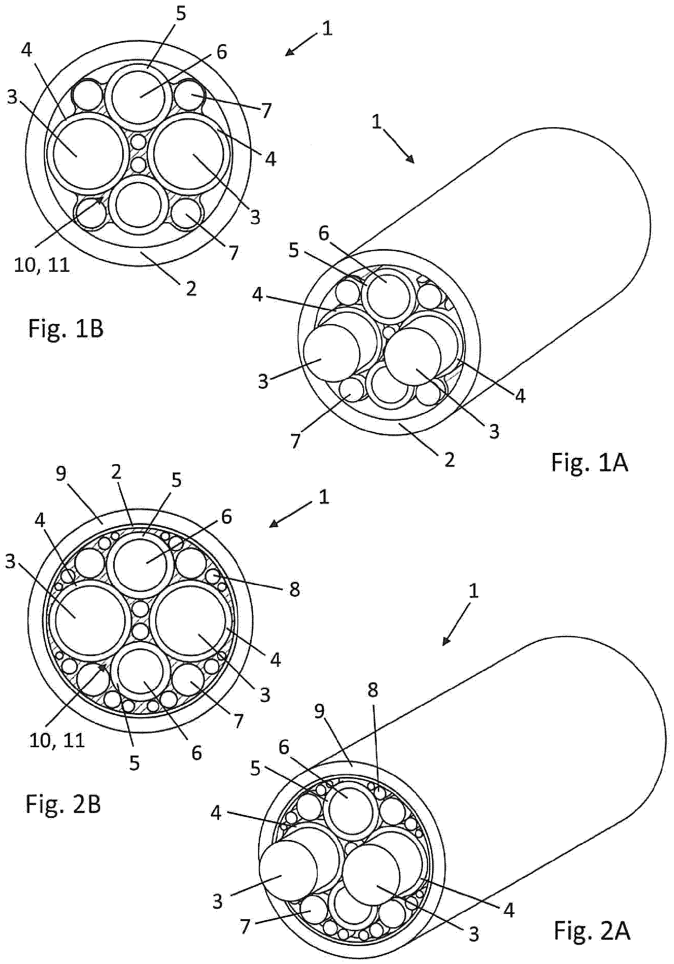

In den Figuren 1A und 1B ist ein erfindungsgemäßes Ladekabel 1 gemäß einer ersten Ausführungsform der vorliegenden Erfindung dargestellt, wobei in Figur 1A das Ladekabel 1 in einer perspektivischen Darstellung und in Figur 1B in einer Schnittdarstellung gezeigt ist.

Das Ladekabel 1 zur Übertragung elektrischer Energie weist einen Kabelmantel 2 auf, der sämtliche Komponenten des Ladekabels 1 umschließt. Das Ladekabel 1 weist ferner zwei Stromleiterkabel 3 auf, die in dem dargestellten Ausführungsbeispiel zu Übertragung von Gleichstrom ausgebildet sind. Die beiden Stromleiterkabel 3 sind jeweils von einem Isolationsmantel 4 umschlossen, sodass die Stromleiterkabel 3 mit deren Umgebung nicht in elektrischen Kontakt stehen.

Aus den Figuren 1A und 1B ist ersichtlich, dass innerhalb des Ladekabels 1 zwischen dem Kabelmantel 2 und dem Stromleiterkabel 3, im Genaueren zwischen dem Kabelmantel 2 und den Isolationsmänteln 4 Hohlräume 10 angeordnet sind. Diese Hohlräume 10 sind mit einem Wärmeleitmedium 11 gefüllt, sodass das Wärmeleitmedium 11 mit den Isolationsmänteln 4 der Stromleiterkabel 3 in direkten Kontakt steht.

Daher wird innerhalb der Stromleiterkabel 3 durch ohmsche Verluste erzeugte Wärme sehr effektiv an das Wärmeleitmedium 11 abgegeben, die sodann die aufgenommene Wärme an die weiteren Strukturen und Bauteile des Ladekabels 1 abgibt. Folglich wird einer Überhitzung der Stromleiterkabel 3 durch Bereitstellen des Wärmeleitmediums 11 in den Hohlräumen 10 des Ladekabels 1 wirksam entgegengewirkt.

Aus den Figuren 1A und 1B ist ersichtlich, dass das Ladekabel 1 ferner zwei Kühlleitungen 5 aufweist, in denen jeweils ein Kühlfluidkanal 6 gebildet ist. Die Kühlleitungen 5 sind mit einem Kühlfluid durchströmbar. Die von den Stromleiterkabeln 3 erzeugte und auf die Wärmeleitflüssigkeit 10 übertragene Wärme wird somit mittels eines Kühlfluidstroms innerhalb der Kühlleitungen 5, die ebenfalls mit dem Wärmeleitmedium 11 in direktem Kontakt stehen, effektiv abtransportiert.

Es ist ferner ersichtlich, dass das Ladekabel 1 mehrere Wärmeleitstränge 7 aufweist, die ebenfalls mit dem Wärmeleitmedium 11 in direkten Kontakt stehen. Die Wärmeleitstränge 7 können beispielsweise als Kupferleitungen 7 ausgebildet sein. Die Wärmeleitstränge 7 weisen eine hohe Wärmeleitfähigkeit auf, sodass die von der Wärmeleitflüssigkeit 11 aufgenommene Wärme mittels der Wärmeleitstränge 7 effektiv innerhalb des Ladekabels 1 verteilt wird.

Das erfindungsgemäße Ladekabel 1 weist ferner mehrere Füllstränge 8 auf, die ebenfalls mit dem Wärmeleitmedium 11 in direktem Kontakt stehen. Die Füllstränge 8 können aus einem Fasermaterial, beispielsweise aus einem Baumwollfasergewebe gebildet sein. Bei der Herstellung des Ladekabels 1 können die Füllstränge 8 mit dem Wärmeleitmedium 11 getränkt sein, sodass bei einer Verseilung des Ladekabels 1 das in den Füllstränge 8 gespeicherte Wärmeleitmedium 11 in die Hohlräume 10 des Ladekabels 11 abgegeben werden.

In den Figuren 2A und 2B ist ein erfindungsgemäßes Ladekabel 1 gemäß einer zweiten Ausführungsform der vorliegenden Erfindung dargestellt, wobei in Figur 2A das Ladekabel 1 in einer perspektivischen Darstellung und in Figur 2B in einer Schnittdarstellung gezeigt ist. Das Ladekabel 1 gemäß der zweiten Ausführungsform unterscheidet sich von dem Ladekabel 1 gemäß der ersten Ausführungsform dadurch, dass das Ladekabel 1 gemäß der zweiten Ausführungsform ferner eine Metallumhüllung 9 aufweist, die den Kabelmantel 2 des Ladekabels 1 umhüllt. Die Metallumhüllung 9 dient einer verbesserten Wärmeabfuhr des Ladekabels 1 an die Umgebung. Der übrige Aufbau des Ladekabels 1 gemäß der zweiten Ausführungsform ist identisch mit der Ausbildung des Ladekabels 1 gemäß der ersten Ausführungsform, sodass auf die obere Beschreibung verwiesen wird.

### Bezugszeichenliste:

- 1: Ladekabel
- 2: Kabelmantel
- 3: Stromleiterkabel
- 4: Isolationsmantel (des Stromleiterkabels)
- 5: Kühlleitung
- 6: Kühlfluidkanal (der Kühlleitung)
- 7: Wärmeleitstrang / Kupferstrang
- 8: Füllstrang
- 9: Metallumhüllung
- 10: Hohlraum im Ladekabel
- 11: Wärmeleitmedium / Wärmeleitgel / Wärmeleitflüssigkeit

## Patentansprüche

1. Ladekabel (1) zur Übertragung elektrischer Energie mit einem Kabelmantel (2) und zumindest einem innerhalb des Kabelmantels (2) angeordneten Stromleiterkabel (3), wobei zumindest ein Hohlraum (10) innerhalb des Ladekabels (1) zwischen dem Kabelmantel (2) und dem Stromleiterkabel (3) mit einem Wärmeleitmedium (11) derart gefüllt ist, dass das Wärmeleitmedium (11) in direkten Kontakt mit dem Stromleiterkabel (3) steht, wobei das Wärmeleitmedium (11) als Gel (11), insbesondere als mit einem Keramikpulver gefülltes Gel (11) ausgebildet ist, **dadurch gekennzeichnet, dass** das Ladekabel (1) zumindest eine Kühlleitung (5) aufweist, die innerhalb des Kabelmantels (2) angeordnet und von einem Kühlfluid durchströmbar ist.

2. Ladekabel (1) nach Anspruch 1, **dadurch gekennzeichnet, dass** ein Hohlraum (10) im Ladekabel (1) zwischen dem Kabelmantel (2) und der Kühlleitung (5) mit dem Wärmeleitmedium (11) gefüllt ist, so dass das Wärmeleitmedium (11) in direkten Kontakt mit der Kühlleitung (5) steht.

3. Ladekabel (1) nach einem der vorhergehenden Ansprüche, **dadurch gekennzeichnet, dass** das Ladekabel (1) zumindest einen Wärmeleitstrang (7) aufweist, der mit dem Wärmeleitmedium (11) in direkten Kontakt steht.

4. Ladekabel (1) nach einem der vorhergehenden Ansprüche, **dadurch gekennzeichnet, dass** das Ladekabel (1) zumindest einen Füllstrang (8) aufweist, der mit dem Wärmeleitmedium (11) durchtränkt ist.

5. Ladekabel (1) nach einem der vorhergehenden Ansprüche, **dadurch gekennzeichnet, dass** das Ladekabel (1) eine den Kabelmantel (2) umhüllende Metallumhüllung (9) aufweist.

6. Ladekabel (1) nach einem der Ansprüche 1 bis 5, **dadurch gekennzeichnet, dass** das Wärmeleitmedium (11) als Dispersion (11), insbesondere als mit einem Keramikpulver gefüllte Dispersion (11) ausgebildet ist.

7. Ladestecker zur Kopplung mit einer korrespondierenden Verbindungsvorrichtung und zur Übertragung elektrischer Energie, **dadurch gekennzeichnet, dass** der Ladestecker zumindest ein in einem Ladesteckergehäuse angeordnetes Leistungskontakt aufweist, wobei ein zweiter Anschlussbereich des Leistungskontakts mit einem Ladekabel (1) nach einem der vorhergehenden Ansprüchen galvanisch verbunden ist, und wobei ein erste Anschlussbereich des Leistungskontakts über eine Kontaktseite des Ladesteckergehäuses zugänglich ist.

8. Ladestation zur Abgabe elektrischer Energie an einen Empfänger elektrischer Energie, **dadurch gekennzeichnet, dass** die Ladestation einen Ladestecker nach Anspruch 7 aufweist.

## Claims

1. A charging cable (1) for transmitting electrical energy, having a cable sheath (2) and at least one electric conductor cable (3) arranged within the cable sheath (2), **wherein** at least one cavity (10) within the charging cable (1), between the cable sheath (2) and the electric conductor cable (3), is filled with a heat conduction medium (11) such that the heat conduction medium (11) is in direct contact with the electric conductor cable (3), wherein the heat conduction medium (11) is configured as a gel (11), specifically as a gel (11) which is loaded with a ceramic powder,.
**characterized in that** the charging cable (1) comprises at least one cooling line (5), which is arranged within the cable sheath (2) and can accommodate a flux of coolant fluid.

2. The charging cable (1) as claimed in claim 1, **characterized in that** a cavity (10) in the charging cable (1), between the cable sheath (2) and the cooling line (5) is filled with the heat conduction medium (11), such that the heat conduction medium (11) is in direct contact with the cooling line (5).

3. The charging cable (1) as claimed in one of the preceding claims, **characterized in that** the charging cable (1) comprises at least one heat conduction cord (7), which is in direct contact with the heat conduction medium (11).

4. The charging cable (1) as claimed in one of the preceding claims, **characterized in that** the charging cable (1) comprises at least one filler cord (8), which is impregnated with the heat conduction medium (11).

5. The charging cable (1) as claimed in one of the preceding claims, **characterized in that** the charging cable (1) comprises a metal cladding (9) which encloses the cable sheath (2).

6. The charging cable (1) as claimed in one of claims 1 to 5, **characterized in that** the heat conduction medium (11) is configured as a dispersion (11), specifically as a dispersion (11) which is loaded with a ceramic powder.

7. A charging plug for connection to a corresponding coupling device and for the transmission of electrical energy, **characterized in that** the charging plug comprises at least one power contact, which is arranged in a charging plug housing, wherein a second contact region of the power contact is galvanically connected to a charging cable (1) as claimed in one of the preceding claims, and wherein a first contact region of the power contact is accessible via a contact side of the charging plug housing.

8. A charging station for discharging electrical energy to a recipient of electrical energy, **characterized in that** the charging station comprises a charging plug as claimed in claim 7.

## Revendications

1. Câble de charge (1) permettant la transmission d'énergie électrique comportant une gaine de câble (2) et au moins un câble conducteur de courant (3) disposé à l'intérieur de la gaine de câble (2), au moins une cavité (10) à l'intérieur du câble de charge (1), entre la gaine de câble (2) et le câble conducteur de courant (3), étant remplie d'un milieu conducteur de chaleur (11) de telle sorte que le milieu conducteur de chaleur (11) est en contact direct avec le câble conducteur de courant (3), le milieu conducteur de chaleur (11) étant conçu sous forme de gel (11), en particulier sous forme de gel (11) rempli d'une poudre céramique, **caractérisé en ce que** le câble de charge (1) présente au moins une conduite de refroidissement (5) qui est disposée à l'intérieur de la gaine de câble (2) et à travers laquelle un fluide de refroidissement peut s'écouler.

2. Câble de charge (1) selon la revendication 1, **caractérisé en ce qu'**une cavité (10) dans le câble de charge (1), entre la gaine de câble (2) et la conduite de refroidissement (5), est remplie du milieu conducteur de chaleur (11) de telle sorte que le milieu conducteur de chaleur (11) est en contact direct avec la conduite de refroidissement (5).

3. Câble de charge (1) selon l'une des revendications précédentes, **caractérisé en ce que** le câble de charge (1) présente au moins un fil conducteur de chaleur (7) qui est en contact direct avec le milieu conducteur de chaleur (11).

4. Câble de charge (1) selon l'une des revendications précédentes, **caractérisé en ce que** le câble de charge (1) présente au moins un fil de remplissage (8) qui est imprégné du milieu conducteur de chaleur (11).

5. Câble de charge (1) selon l'une des revendications précédentes, **caractérisé en ce que** le câble de charge (1) présente un revêtement métallique (9) entourant la gaine de câble (2).

6. Câble de charge (1) selon l'une des revendications 1 à 5, **caractérisé en ce que** le milieu conducteur de chaleur (11) est conçu sous forme de dispersion (11), en particulier sous forme de dispersion (11) remplie d'une poudre céramique.

7. Fiche de charge permettant le couplage à un dispositif de connexion correspondant et permettant la transmission d'énergie électrique, **caractérisée en ce que** la fiche de charge présente au moins un contact de puissance disposé dans un boîtier de fiche de charge, une seconde zone de raccordement du contact de puissance étant connectée de manière galvanique à un câble de charge (1) selon l'une des revendications précédentes, et une première zone de raccordement du contact de puissance étant accessible par l'intermédiaire d'un côté de contact du boîtier de fiche de charge.

8. Station de charge permettant la fourniture d'énergie électrique à un récepteur d'énergie électrique, **caractérisée en ce que** la station de charge présente une fiche de charge selon la revendication 7.
